# EUROPEAN PATENT SPECIFICATION

(11) **EP 4 095 417 B1**
(45) Date of publication and mention of the grant of the patent: **18.09.2024**
(21) Application number: 22175515.0
(22) Date of filing: 25.05.2022
(51) Int. Cl.: F16H 57/04, F16D 48/02, F16D 67/04, B60K 25/06, B60K 17/28, B60T 1/06, F16H 61/00, F16H 61/02

(54) **POWER TAKE-OFF ASSEMBLY OF A WORK VEHICLE COMPRISING AN IMPROVED LUBRICATION ARRANGEMENT**
ZAPFWELLENANORDNUNG EINES ARBEITSFAHRZEUGS MIT VERBESSERTER SCHMIERVORRICHTUNG
ENSEMBLE PRISE DE FORCE D'UN ENGIN DE TRAVAIL COMPRENANT UN AGENCEMENT DE LUBRIFICATION AMÉLIORÉ

(30) Priority: 28.05.2021 IT 202100014051
(43) Date of publication of application: 30.11.2022
(73) Proprietor: CNH Industrial Italia S.p.A., 10156 Torino (IT)
(72) Inventor: ARBEITHUBER, Peter, 4484 Kronstorf (AT); HUBER, Roland, 4391 Waldhausen (AT); ZÖTTL, Michael, 3352 St. Peter (AT)
(74) Representative: CNH Industrial IP Department

(56) References cited:
- EP-A1- 4 019 795
- EP-A2- 1 295 750
- US-A- 3 669 229
- US-A- 5 937 697

## Description

### TECHNICAL FIELD

The present invention concerns a power take-off assembly for a work vehicle comprising a hydraulic arrangement, in particular a lubrication arrangement for lubricating operational elements of the power take-off assembly such as bearings.

### BACKGROUND OF THE INVENTION

Work vehicles such as agricultural vehicles comprise a power take-off (PTO) assembly provided with a powertrain configured to provide a torque at an output shaft to carry operational means of the work vehicle.

Prior-art document US 3 669 229 A discloses such a power take-off assembly.

Such PTO powertrain usually comprise at least one clutch, which is configured to engage and disengage two or more rotating shafts of the PTO, e.g. an input shaft to the output shaft of the PTO and brakes arrangement for braking one of such shafts.

The aforementioned clutch and brakes are controlled by a valve arrangement that is configured to provide an oil flow to operate these latter.

Furthermore, at least part of such oil flow is spilled for lubricating operational elements of the PTO such as bearings. However, such spiller oil flow depends on pressure and temperature of the oil flow controlled by the aforementioned valve arrangement.

Accordingly, it may happen that the operational elements of the PTO would not be provided with a sufficient quantity of oil flow to guarantee a correct lubrication. In particular, bearings usually needs a constant 0,5 l/min oil flow to guarantee a correct lubrication.

In view of the above, the need is felt to provide a PTO assembly comprising a hydraulic arrangement that allows to provide a suitable lubrication that is independent with respect to oil flow conditions.

An aim of the present invention is to satisfy the above mentioned needs in a cost effective and optimized manner.

### SUMMARY OF THE INVENTION

The aforementioned aim is reached by a power take-off assembly comprising a hydraulic arrangement as claimed in the appended independent claim.

Preferred embodiments of the invention are realized according to the claims dependent on the above independent claim.

### BRIEF DESCRIPTION OF DRAWINGS

For a better understanding of the present invention, a preferred embodiment is described in the following, by way of a non-limiting example, with reference to the attached drawings wherein:
- Figure 1 is a longitudinal section view of a power take-off assembly comprising a hydraulic arrangement according to the present invention and;
- Figures 2 and 3 are each a longitudinal section view of the power take-off assembly of Figure 1 in two different operational configurations.

### DETAILED DESCRIPTION OF THE INVENTION

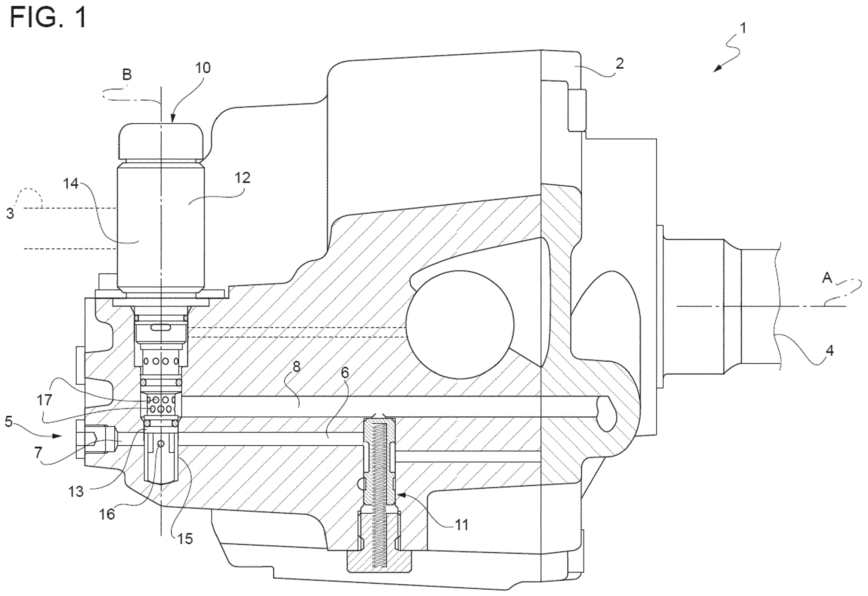

With reference to Figure 1, numeral 1 indicates a power take-off, PTO, assembly of a work vehicle, in particular a specialty vehicle or an agricultural vehicle, such as a tractor or an earth-moving machine.

PTO assembly 1 comprises a housing 2 for accommodating a transmission between an input shaft 3 and an output shaft 4, which is rotatable about a longitudinal axis A and is installed on the work vehicle in a position that allows it to power external implements by means of mating fittings.

PTO assembly 1 further comprises, at least, a clutch configured to selectively couple output shaft 4 to input shaft 3, and a brake configured to impart a braking torque to output shaft 4.

Furthermore, PTO assembly 1 comprises a hydraulic arrangement 5 for controlling the operation of the aforementioned clutch and the brake.

In particular, the hydraulic arrangement 5 comprises, in turn, a brake line 6 fluidly connecting a source 7 of fluid in pressure of the work vehicle to the brake and a clutch line 8 fluidly connecting the source 5 to the clutch. The fluid in pressure is a fluid suitable for actuating both the brake and the clutch, such as a mineral oil.

In detail, the brake can be set in a braked configuration, in which it imparts, in use, the braking torque to output shaft 4, so as to prevent output shaft 4 from freely rotating about longitudinal axis A or in an unbraked configuration, in which it allows, in use, output shaft 4 to freely rotate about longitudinal axis A.

According to a preferred embodiment, the brake is set by default in the braked configuration, for safety reasons, so as to prevent output shaft 4 from undesirably rotating about longitudinal axis A.

The hydraulic arrangement 1 further comprises valve means 10 configured to control the flow of fluid between source 7, brake line 6 and clutch line 8 and second valve means 11 configured to control the flow of fluid between source 5 and the brake. The detailed disclosure of the operation arrangement is, for instance, disclosed in patent application US3669229A and therefore will not described in the following for sake of brevity.

Advantageously, first valve means 10 comprise an electro-actuated valve 12 that is, in detail controlled as a function of a pressure of the fluid inside clutch line 8.

The electro-actuated valve 12 comprises a spool 13 that is actuated by electro-magnetic means 14 such as a solenoid to move along an axis B that is advantageously perpendicular to axis A. The spool 13 moves into a chamber 15 that intersect the brake line 6, clutch line 8 and source 5.

In detail, the spool 13 can assume a first, default, configuration, wherein the fluid may flow from source 5 to brake line 7 via chamber 15 or a second, actuated, configuration, wherein the fluid may flow from source 5 to clutch line 8 via chamber 15.

The spool 13 is advantageously provided with openings 16, 17 that are configured to drain part of the fluid coming from source 5 inside spool 13 in both above defined configuration and to direct this latter to a conduit (schematically shown in dotted lines in the figures) configured to provide such leakage flow to operational elements (not shown) of the PTO 1 such as bearings.

In particular, the spool 13 is provided with at least a first opening 16 realized on a portion of spool 13 that is in fluidic communication with brake line 7 and source 5 in the first configuration and with at least a second opening 17 realized on a portion of spool 13 that is in fluidic communication with clutch line 8 and source 5 in the second configuration.

In particular, the first and second openings 16, 17 are realized on a lateral wall defining the spool 13. More preferably, they can be of circular shape and may be more than one.

The spool 13 is advantageously hollow thereby collecting the leakage fluid coming from openings 16, 17 to at least a conduit configured to provide the leakage oil to operational elements of the PTO.

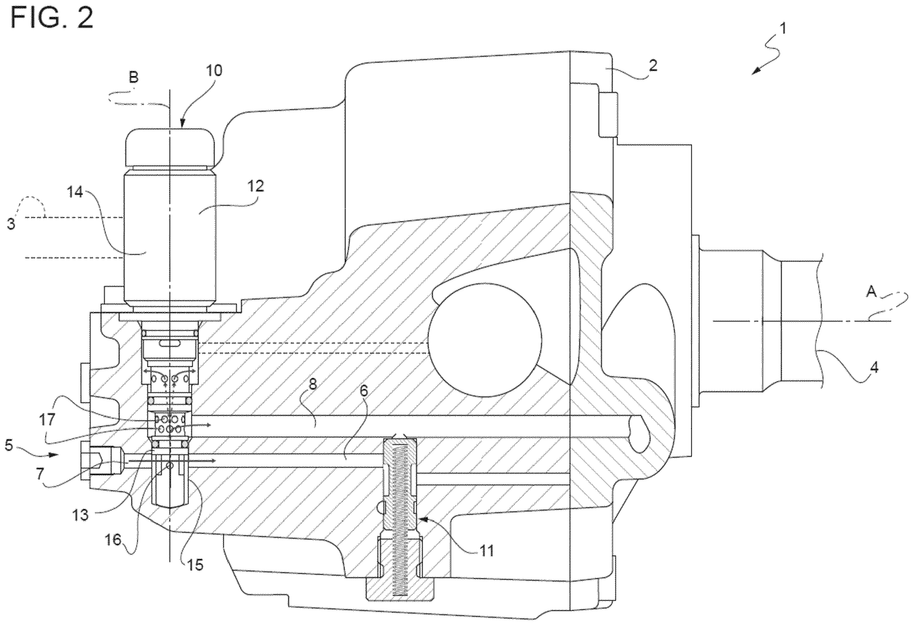

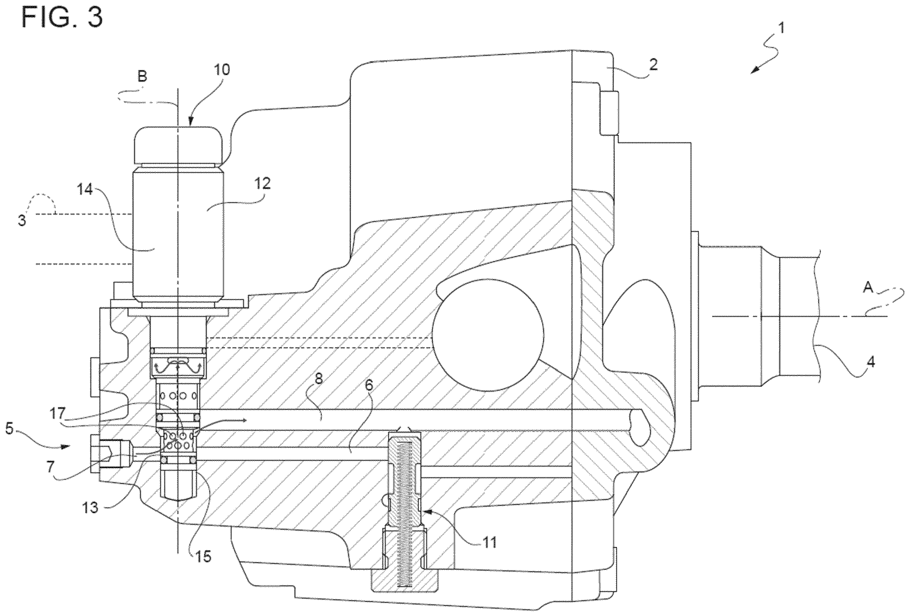

The operation of hydraulic arrangement 10 for a PTO assembly according to the invention and described as above is illustrated making reference to figures 2 and 3.

In figure 2, the spool 13 is in its first configuration, thereby providing oil flow only to brake conduit 7. In such condition a flow F of oil passes through openings 16 thereby passing inside spool 13 and then to the lubrication conduit.

In figure 3, the spool 13 is in its second configuration, thereby providing oil flow only to clutch conduit 8. In such condition a flow F of oil passes through openings 17 thereby passing inside spool 13 and then to the lubrication conduit.

In the passage between the configuration of figures 2 and 3 the leakage oil flow is maintained constant because while the flow spilled from openings 16 reduces, it increases the flow of oil spilled from openings 17.

In view of the foregoing, the advantages of a power take off assembly 1 comprising a hydraulic arrangement 10 according to the invention are apparent.

It is clear that thanks to the openings 16, 17 the leakage oil flow is not wasted by used for directly lubricating operational elements of the PTO.

In particular, such flow may be designed to have a constant value according to any operational condition of the vehicle, thereby guarantee a 0,5 l/min oil flow to bearings.

In particular, each valve comprises, generally, a leakage flow. Thanks to the invention such leakage flow is used and not wasted, thereby reducing the oil amount of the hydraulic arrangement and therefore reducing vehicle power consumption.

It is clear that modifications can be made to the described power take off assembly which do not extend beyond the scope of protection defined by the claims.

Clearly, the valve arrangement 10 may be realized in different way, such as the shape and number of openings 16 and 17 or of spool 13.

## Claims

1. Power take-off, PTO, assembly (1) for a work vehicle, said PTO assembly (1) comprising:
- at least one output shaft (4);
- at least one clutch, which is configured to selectively couple said output shaft (4) to a mechanical power source of said work vehicle; and
- at least one brake, which is configured to impart a braking torque to said output shaft (4); and
- a hydraulic arrangement (10) comprising:
- a brake line (6) configured to fluidly connect a source of pressurized fluid (7) of said work vehicle to said at least one brake; and
- a clutch line (8) configured to fluidly connect said source (7) to said at least one clutch;
said hydraulic arrangement (10) further comprising valve means (11, 12), which are configured to control the flow of fluid between said source (7), said brake line (6) and said clutch line (8);
wherein said valve means (11, 12) comprises a spool (13), said spool (13) has at least a first configuration wherein it allows the passage of fluid from said source (7) to said brake line (6) and a second configuration wherein it allows the passage of fluid from said source (7) to said clutch line (8),
said PTO assembly (1) is **characterized in that** in both said first and second configurations said valve means (11, 12) define a conduit for the leakage flow configured to be directed to operational elements of said PTO assembly (1) for lubrication thereof.

2. Power take off assembly according to claim 1, wherein said spool (13) is hollow and defines openings (16, 17) allowing the passage of said leakage flow from said source (7) to said operational elements in both said first and second configurations via the inner space of said spool (13).

3. Power take off assembly according to claim 1, wherein said spool (13) defines at least a first opening (16) configured to be in fluid communication between said source (7) and said brake line (6) when said valve (12) is in said first configuration.

4. Power take off assembly according to claim 1, wherein said spool (13) defines at least a second opening (17) configured to be in fluid communication between said source (7) and said clutch line (8) when said valve (12) is in said second configuration.

5. Power take off assembly according to any of the preceding claims, wherein said valve (12) is an electro actuated valve.

6. Power take off assembly according to any of the preceding claims, wherein said operational elements are bearings.

## Patentansprüche

1. Zapfwellen- (PTO-)Anordnung (1) für ein Arbeitsfahrzeug, wobei die PTO-Anordnung (1) umfasst:
- zumindest eine Ausgangswelle (4);
- zumindest eine Kupplung, die dazu eingerichtet ist, die Ausgangswelle (4) wahlweise mit einer mechanischen Energiequelle des Arbeitsfahrzeugs zu koppeln; und
- zumindest eine Bremse, die dazu eingerichtet ist, ein Bremsmoment auf die Ausgangswelle (4) zu übertragen; und
- eine Hydraulikanordnung (10) mit:
- einer Bremsleitung (6), die dazu eingerichtet ist, eine Quelle (7) von unter Druck stehendem Fluid des Arbeitsfahrzeugs mit der zumindest einen Bremse zu verbinden, und
- einer Kupplungsleitung (8), die dazu eingerichtet ist, die Quelle (7) mit der zumindest einen Kupplung zu verbinden;
wobei die Hydraulikanordnung (10) des Weiteren Ventilmittel (11, 12) umfasst, die dazu eingerichtet sind, den Fluidstrom zwischen der Quelle (7), der Bremsleitung (6) und der Kupplungsleitung (8) zu steuern;
wobei die Ventilmittel (11, 12) einen Kolben (13) umfassen, wobei der Kolben (13) zumindest eine erste Konfiguration, in der er den Durchfluss von Fluid von der Quelle (7) zu der Bremsleitung (6) erlaubt, und eine zweite Konfiguration aufweist, in der er den Durchfluss von Fluid von der Quelle (7) zu der Kupplungsleitung (8) erlaubt,
wobei die PTO-Anordnung (1) **dadurch gekennzeichnet ist, dass** die Ventilmittel (11, 12) sowohl in der ersten als auch in der zweiten Konfiguration eine Leitung für den Leckagefluss definieren, der dazu eingerichtet ist, Betriebselementen der PTO-Anordnung (1) zu deren Schmierung zugeführt zu werden.

2. Zapfwellen-Anordnung nach Anspruch 1, wobei der Kolben (13) hohl ist und Öffnungen (16, 17) definiert, die sowohl in der ersten als auch in der zweiten Konfiguration den Durchfluss des Leckageflusses von der Quelle (7) zu den Betriebselementen über den Innenraum des Kolbens (13) erlauben.

3. Zapfwellen-Anordnung nach Anspruch 1, wobei der Kolben (13) zumindest eine erste Öffnung (16) definiert, die dazu eingerichtet ist, in Fluidverbindung zwischen der Quelle (7) und der Bremsleitung (6) zu stehen, wenn das Ventil (12) sich in der ersten Konfiguration befindet.

4. Zapfwellen-Anordnung nach Anspruch 1, wobei der Kolben (13) zumindest eine zweite Öffnung (17) definiert, die dazu eingerichtet ist, in Fluidverbindung zwischen der Quelle (7) und der Kupplungsleitung (8) zu stehen, wenn das Ventil (12) sich in der zweiten Konfiguration befindet.

5. Zapfwellen-Anordnung nach einem der vorhergehenden Ansprüche, wobei das Ventil (12) ein elektrisch betätigtes Ventil ist.

6. Zapfwellen-Anordnung nach einem der vorhergehenden Ansprüche, wobei die Betriebselemente Lager sind.

## Revendications

1. Ensemble de prise de force (PDF) (1) pour un véhicule de travail, ledit ensemble de PDF (1) comprenant :
- au moins un arbre de sortie (4) ;
- au moins un embrayage, configuré pour coupler sélectivement ledit arbre de sortie (4) à une source d'énergie mécanique dudit véhicule de travail ; et
- au moins un frein, qui est configuré pour transmettre un couple de freinage audit arbre de sortie (4) ; et
- un dispositif hydraulique (10) comprenant :
- une conduite de frein (6) configurée pour raccorder fluidiquement une source de fluide sous pression (7) dudit véhicule de travail audit au moins un frein ; et
- une conduite d'embrayage (8) configurée pour raccorder fluidiquement ladite source (7) audit au moins un embrayage ;
ledit dispositif hydraulique (10) comprenant en outre des moyens de régulation (11, 12), qui sont configurés pour contrôler l'écoulement du fluide entre ladite source (7), ladite conduite de frein (6) et ladite conduite d'embrayage (8) ;
dans lequel lesdits moyens de régulation (11, 12) comprennent un tiroir (13), ledit tiroir (13) a au moins une première configuration dans laquelle il permet le passage du fluide depuis ladite source (7) vers ladite conduite de frein (6) et une seconde configuration dans laquelle il permet le passage du fluide depuis ladite source (7) vers ladite conduite d'embrayage (8),
ledit ensemble de PDF (1) est **caractérisé en ce que** dans lesdites première et seconde configurations, lesdits moyens de régulation (11, 12) définissent un conduit pour l'écoulement de fuite configuré pour être dirigé vers des éléments opérationnels dudit ensemble de PDF (1) pour la lubrification de ce dernier.

2. Ensemble de prise de force selon la revendication 1, dans lequel ledit tiroir (13) est creux et définit des ouvertures (16, 17) permettant le passage dudit écoulement de fuite depuis ladite source (7) vers lesdits éléments opérationnels dans lesdites première et seconde configurations par le biais de l'espace intérieur dudit tiroir (13).

3. Ensemble de prise de force selon la revendication 1, dans lequel ledit tiroir (13) définit au moins une première ouverture (16) configurée pour être en communication fluidique entre ladite source (7) et ladite conduite de frein (6) lorsque ladite vanne (12) est dans ladite première configuration.

4. Ensemble de prise de force selon la revendication 1, dans lequel ledit tiroir (13) définit au moins une seconde ouverture (17) configurée pour être en communication fluidique entre ladite source (7) et ladite conduite d'embrayage (8) lorsque ladite vanne (12) est dans ladite seconde configuration.

5. Ensemble de prise de force selon l'une quelconque des revendications précédentes, dans lequel ladite vanne (12) est une vanne à actionnement électrique.

6. Ensemble de prise de force selon l'une quelconque des revendications précédentes, dans lequel lesdits éléments opérationnels sont des roulements.
